# NEUE EUROPÄISCHE PATENTSCHRIFT

(11) **EP 2 690 413 B2**
(45) Veröffentlichungstag und Bekanntmachung des Hinweises auf die Entscheidung über den Einspruch: **04.03.2020**
(45) Hinweis auf die Patenterteilung: 23.03.2016
(21) Anmeldenummer: 12177901.1
(22) Anmeldetag: 25.07.2012
(51) Int. Cl.: G01D 11/24

(54) **Sensor**
Sensor
Capteur

(43) Veröffentlichungstag der Anmeldung: 29.01.2014
(73) Patentinhaber: Baumer Electric AG, 8501 Frauenfeld (CH)
(72) Erfinder: Hohloch, Erich, 8355 Aadorf (CH); Schwendimann, Mathias, 8212 Neuhausen (CH)
(74) Vertreter: Strauss, Steffen

(56) Entgegenhaltungen:
- DE-A1- 4 023 792
- DE-B3-102006 001 290
- DE-B3-102006 001 290
- DE-C1- 19 544 815
- DE-C2- 10 013 218

## Beschreibung

Die vorliegende Erfindung betrifft einen Sensor gemäß den Merkmalen des Anspruches 1 und ein Verfahren zur Herstellung eines Sensors gemäß den Merkmalen des Anspruches 8.

Sensoren, zum Beispiel optische, induktive oder kapazitive Sensoren, werden in den verschiedensten technischen Anwendungen zur Erfassung von physikalischen oder chemischen Parametern eingesetzt. Das Gehäuse dient dazu, um Elektronikkomponenten auf einer Leiterplatte sowie ein Sensorelement vor schädigenden Umwelteinflüssen zu schützen. Die Elektronickomponenten innerhalb des Gehäuses sind dabei u.a. mit elektrischem Strom zu versorgen. Aus diesem Grund ist es erforderlich, elektrische Kontakte durch eine Gehäusewandung des Gehäuses zu führen, um an einem äußeren Teil der Kontakte den Sensor von außen mit elektrischem Strom versorgen zu können.

Die elektrischen Kontakte sind an einem Steckerteil befestigt Das Steckerteil ist aus im Allgemeinen aus Kunststoff ausgeführt und ist an einer Steckerhülse aus Metall fixiert. Die Steckerhülse aus Metall ist an einer Steckeröffnung des Gehäuses mit dem Gehäuse mit einer Pressverbindung verbunden. Die Pressverbindung benötigt eine große Pressfläche an der Steckeröffnung des Gehäuses und außenseitig an der Steckerhülse, so dass dadurch in nachteiliger Weise die Pressverbindung in Richtung einer Längsachse der Steckerhülse eine große Ausdehnung aufweist. Dadurch benötigt das Gehäuse des Sensors eine große axiale Ausdehnung. Zur Herstellung der Pressverbindung sind große Kräfte erforderlich.

Bei einer fluiddichten Ausführung der Sensoren werden die Leiterplatte mit den Elektronikkomponenten und das Sensorelement beispielsweise von einer Vergussmasse umhüllt. Die Vergussmasse dient dazu, einerseits die Leiterplatte und das Sensorelement form- und stoffschlüssig zu fixieren und andererseits schädigende Umwelteinflüsse, zum Beispiel Flüssigkeiten, von der Leiterplatte und dem Sensorelement fernzuhalten.

Die DE 195 44 815 C1 zeigt einen Sensor mit einer auf einem Träger angeordneten elektrischen Schaltung, welche mit einem elektrischen Anschlusselement und mit einem Sensorelement verbunden ist. Ferner ist ein Gehäuse mit einem Innenraum zur Aufnahme des Trägers mit der elektrischen Schaltung gezeigt, welches jeweils eine Öffnung für das Anschlusselement sowie für das Sensorelement aufweist. Dabei sind das Sensorelement und ein erster Teil des Trägers mit der elektrischen Schaltung in eine Duroplast-Formmasse eingebettet. Ein zweiter Teil des Trägers mit der elektrischen Schaltung und das elektrische Anschlusselement sind von einer Thermoplast-Formmasse umschlossen.
Benachbart zu der Öffnung für das Sensorelement ist in einem Zwischenraum zwischen der Duropläst-Formmasse und dem Gehäuse eine Dichtung angeordnet.

Die DE 100 13 218 C2 zeigt ein Verfahren zur Herstellung eines Positionssensors mit einem Gehäuse in dessen Gehäuseinnenraum ein auf einem Träger angeordneter elektrischer Schaltkreis sitzt. Das Verfahren umfasst die Schritte: der Träger wird mit einem Steckereinsatz als elektrischem Anschlusselement zu einer Trager-Anschlusselement-Kombination verbunden, bei der das Anschlusselement starr mit dem Träger verbunden ist, die Träger-Anschlusselement-Kombination wird in das an einem Messende geschossene Gehäuse von einem dem Messende gegenüberliegenden Hinterende her eingeführt, der Raum um die Träger-Anschlusselement-Kombination im Gehäuseinnenraum wird bis zu einem bestimmten Niveau mit einer Formmasse verfüllt und mit dem Hinterende des Gehäuses wird vor Aushärtung der Formmasse eine Kappe verbunden, durch die die Abschlüsse des Anschlusselements geführt sind, und mit der die Träger-Anschlusselement-Kombination in dem Gehäuse fixiert wird.

Die DE 40 237 92 A1 befasst sich mit der Herstellung eines Näherungsschalters, dessen Kunststoffeinbettung ohne Unterbrechung des Fertigungstaktes möglich ist.

Die Aufgabe der vorliegenden Erfindung besteht darin, einen Sensor zur Verfügung zu stellen, der die aufgezeigten Nachteile im Stand der Technik überwindet, insbesondere die Längsausdehnung und damit die Einbautiefe eines Sensorgehäuses zu minimieren.

Diese Aufgabe wird gelöst mit einem Sensor, umfassend wenigstens ein Gehäuse mit einer Steckeröffnung, welches einen Gehäuseinnenraum einschließt, eine Steckerhülse, welche mit dem Gehäuse an der Steckeröffnung verbunden ist, eine Leiterplatte mit Elektronikkomponenten, welche innerhalb des Gehäuseinnenraumes angeordnet ist, ein Sensorelement, welches innerhalb des Gehäuseinnenraumes angeordnet ist, wobei die Steckerhülse in einen vorderen Abschnitt und in einen hinteren Abschnitt unterteilt ist und wobei der vordere Abschnitt im Querschnitt offen und der hintere Abschnitt im Querschnitt geschlossen ist. Ferner ist an der Steckeröffnung des Gehäuses wenigstens eine Hülsenformschlussgeometrie ausgebildet. An der Steckerhülse ist wenigstens eine Hülsengegenformschlussgeometrie ausgebildet. Die Hülsenformschlussgeometrie und die Hülsengegenformschlussgeometrie sind dabei so ausgebildet, dass diese wenigstens in formschlüssiger Wirkverbindung miteinander stehen, so dass die Steckerhülse auf vorteilhafte Weise drehgesichert mit dem Gehäuse verbunden ist.

Aufgrund der Geometrie der Steckeröffnung und der Steckerhülse kann somit eine formschlüssige Drehsicherurig der Steckerhülse an dem Gehäuse ausgeführt werden. Dadurch ist nur noch eine axiale Befestigung der Steckerhülse an dem Gehäuse erforderlich. Diese kann beispielsweise mit einer Pressverbindung, erfolgen. Dadurch werden eine geringere Pressfläche und auch eine geringere Presskraft zur Herstellung der Pressverbindung benötigt, da dadurch nur die axiale Sicherung der Steckerhülse an dem Gehäuse, nicht jedoch eine Drehsicherung erforderlich ist.

Der vordere Abschnitt und wenigstens ein Teil des angrenzenden hinteren Abschnitts der Steckerhülse sind als ein Schubladenelement ausgebildet.

In einer weiteren Ausgestaltung weist die Hülsenformschlussgeometrie zwei Absätze und eine Auflagefläche auf, wobei wenigstens ein Teil des Schubladenelementes mit zwei Drehkonterflächen und einer Gegenauflagefläche als Hülsengegenformschlussgeometrie ausgebildet ist und wobei die zwei Drehkonterflächen auf den zwei Absätzen aufliegen und die Auflagefläche auf der Gegenauflagefläche aufliegt.

Vorzugsweise ist die Auflagefläche und die Gegenauflagefläche im Querschnitt im Wesentlichen kreissegmentförmig und/oder U-förmig, insbesondere halbkreisförmig, ausgebildet ist. Das Schubladenelement kann im Querschnitt im Wesentlichen kreissegmentförmig und/oder U-förmig, insbesondere halbkreisförmig, ausgebildet sein.

Die Steckerhülse ist im Querschnitt außenseitig als Führuhgsgegenfläche rechteckförmig, insbesondere quadratisch, ausgebildet, so dass die Steckerhülse außenseitig die Hülsengegenformschlussgeometrie bildet. Die Steckeröffnung ist als Führungsfläche im Querschnitt rechteckförmig, insbesondere quadratisch, ausgebildet, so dass die Steckeröffnung die Hülsenformschlussgeometrie bildet.

Die Führungsgegenfläche außenseitig an der Steckerhülse bildet damit die Hülsengegenformschlussgeometrie, so dass dadurch mit der Führungsgegenfläche nicht nur die axiale Führung der Steckerhülse, sondern auch die Drehsicherung der Steckerhülse ausgebildet ist. Dies gilt in analoger Weise für die Führungsfläche an dem Gehäuse, welche auch eine Hülsenformschlussgeometrie bildet.

In einer Variante ist die wenigstens eine Hülsenformschlussgeometrie als ein Vorsprung ausgebildet. Die wenigstens eine Hülsengegenformschlussgeometrie ist als eine Aussparung ausgebildet. Der Vorsprung greift in die Aussparung ein. Bevorzugt ist der Vorsprung als Zapfen und die Aussparung als ein Schlitz ausgebildet.

Mit der Führungsfläche an dem Gehäuse und der Führungsgegenfläche außenseitig an der Steckerhülse ist die Steckerhülse in axialer Richtung an der Steckeröffnung, geführt bzw. gelagert. Die Drehsicherung wird mit dem Vorsprung ausgebildet, welcher in den Schlitz an der Steckerhülse eingreift. Der Vorsprung ist somit an dem Gehäuse ausgebildet. Umgekehrt kann die Hülsenformschlussgeometrie auch als eine Aussparung, insbesondere als ein Schlitz, ausgebildet sein und die Hülsengegenformschlussgeometrie als ein Vorsprung, insbesondere ein Zapfen.

Die Steckerhülse ist kraftschlüssig, insbesondere mit einer Pressverbindung, axial mit dem Gehäuse verbunden.

Insbesondere ist die wenigstens eine Hülsenformschlussgeometrie an dem vorderen Abschnitt der Steckerhülse ausgebildet ist, wobei der vordere Abschnitt der Steckerhülse wenigstens teilweise, insbesondere vollstäridig, innerhalb des Gehäuseinnenraumes angeordnet ist.

Zweckmäßig weist die Steckerhülse insbesondere an dem vorderen Abschnitt der Steckerhülse eine Verbindungsnase auf. Die Verbindungsnase ist vorzugsweise von einer erhärteten Vergussmasse umschlossen, so dass dadurch die Steckerhülse axial formschlüssig mit der erhärteten Vergussmasse verbunden ist. Die Steckerhülse ist damit auf vorteilhafte Weise in axialer Richtung indirekt an dem Gehäuse befestigt.

Ferner ist in dem vorderen Abschnitt der Steckerhülse ein Steckerteil mit elektrischen Kontaktelementen angeordnet. Das Steckerteil kann aus Kunststoff ausgeführt sein.

Die elektrischen Kontaktelemente sind ferner mechanisch und elektrisch mit Leiterplattenkontaktelementen verbunden. Vorzugsweise sind die elektrischen Kontaktelemente mit einer Löt- oder Klemmverbindung verbunden. Eine Leiterplatte weist vorteilhaft Ausnehmungen auf, innerhalb der die elektrischen Kontakte des Steckerteils angeordnet sind. Damit kann eine elektrische Verbindung der elektrischen Kontaktelemente mit den Leiterplattenkontaktelementen hergestellt werden.

In einer weiteren Ausführung kann die Steckerhülse eine Rampe aufweisen. Mit einer axialen aufgebrachte Druckkraft auf die Rampe in einem spitzen Winkel zu der Längsachse der Steckerhülse kann eine elastische Verformung der Rampe erfolgen, so dass dadurch die Rampe an dem Gehäuse mit einer elastischen Vorspannung mit einer Kraftkomponente senkrecht zu der Längsachse der Steckerhülse fixierbar ist.

Mit der Ausbildung des vorderen Abschnitts und wenigstens eines Teiles des angrenzenden hinteren Abschnitts der Steckerhülse als Schubladenelement können die elektrischen Kontaktelemente auf einfache Weise mit beispielsweise einer Lötverbindung mit der Leiterplatte direkt oder indirekt verbunden werden. Die elektrischen Kontaktelemente befinden sich dabei im Bereich des vorderen Abschnitts der Steckerhülse. Damit kann insbesondere die Steckerhülse in Richtung einer Längsachse kleiner und dadurch kompakter ausgeführt werden. Das Sensorgehäuse lässt sich damit in vorteilhafter Weise in der Längsausdehnung minimieren. Eine Einbautiefe des erfindungsgemässen Sensors ist mit der minimierten Längsausdehnung des Sensorgehäuses vorteilhaft reduziert.

Das Sensorelement kann eine Spule und der Sensor ein induktiver Näherungssensor sein. Alternativ kann das Sensorelement eine LED und/oder ein Phototransistor sein und der Sensor ein optischer Sensor. Vorzugsweise ist das Gehäuse im Bereich der LED und/oder des Phototransistors lichtdurchlässig.

Ein Sensor, insbesondere ein in dieser Schutzrechtsanmeldung beschriebener Sensor, kann mit den folgenden erfindungsgemäßen Verfahrensschritten gemäß Anspruch 8 hergestellt werden.

Während des Einführens der Steckerhülse in die Steckeröffnung wird wenigstens ein Teil des hinteren Abschnitts der Steckerhülse innerhalb der Steckeröffnung form- und kraftschlüssig und somit drehgesichert mit dem Gehäuse verbunden. Dadurch ist nach dem Einführen der Steckerhülse in die Steckeröffnung nur noch eine axiale Verbindung oder Sicherung der Steckerhülse an dem Gehäuse erforderlich. Die Geometrie der Steckerhülse und/oder der Steckeröffnung ist dabei vorzugsweise dahingehend ausgebildet, dass die Steckerhülse nur in einer Drehwinkellage bezüglich des Gehäuses in die Steckeröffnung einschiebbar ist oder eingeschoben werden kann. Dies gewährleistet eine Poka-Joke-Verbindung bei der Montage, so dass dadurch die Steckerhülse nicht in einer falschen Drehwinkellage bezüglich des Gehäuses in die Steckeröffnung eingeschoben werden kann.

In einer ergänzenden Variante wird die Steckerhülse bis zu einem Anschlag in die Steckeröffnung eingeschoben. Anschliessend wird auf die Steckerhülse eine axiale Druckkraft aufgebracht, so dass dadurch die Steckerhülse mit einer Pressverbindung mit dem Gehäuse verbunden wird. Eine form- und/oder kraftschlüssig Verbindung kann mit einer Press-, Klebe-, Löt- und/oder. Schweißverbindung erfolgen.

Mit einer Pressverbindung kann die Steckerhülse in axialer Richtung mit dem Gehäuse mit einem geringen technischen Aufwand ohne ein Spiel in axialer Richtung mit dem Gehäuse fest verbunden werden.

In eine weiteren Ausgestaltung wird mit einer Rampe an dem Gehäuse und/oder der Steckerhülse in einem spitzen Winkel zu einer Längsachse der Steckerhülse aufgrund der axialen auf die Steckerhülse aufgebrachte Druckkraft eine elastische Verformung der Rampe an dem Gehäuse und/oder an der Steckerhülse ausgeführt, so dass dadurch die Rampe an dem Gehäuse und/oder an der Steckerhülse mit einer elastischen Vorspannung mit einer Kraftkomponente senkrecht zu der Längsachse der Steckerhülse aufeinander liegen. Nach dem Einschieben der Steckerhülse bis zu dem Anschlag wird auf die Steckerhülse eine axiale Druckkraft in Richtung zu dem Gehäuse aufgebracht und/oder auf das Gehäuse, so dass dadurch aufgrund der Rampe eine Pressverbindung zwischen der Rampe an dem Gehäuse und/oder der Rampe an der Steckerhülse hergestellt wird.

Insbesondere wird in die Steckerhülse ein Steckerteil; z. B. aus Kunststoff, mit elektrische Kontaktelementen als Kontakte eingeführt und mit der Steckerhülse form- und/oder kraft- und/oder stoffschlüssig verbunden. Insbesondere werden nach dem Verbinden der Steckerhülse mit dem Gehäuse an der Steckeröffnung, insbesondere vor dem Vergießen mit Vergussmasse, und vorzugsweise die elektrischen Kontaktelemente, insbesondere mit einer Löt- oder Klemmverbindung, mit Leiterplattenkontaktelementen an der Leiterplatte verbunden.

Zweckmäßig wird zusätzlich ein Pressring außenseitig auf der Steckerhülse mit dem Gehäuse verpresst, so dass dadurch eine zusätzliche Pressverbindung mittels des Pressringes an dem Gehäuse hergestellt wird.

Zweckmäßig sind die Leiterplatte und/oder das Sensorelement form- und/oder kraftschlüssig mit dem Gehäuse verbunden. Hierzu sind an dem Gehäuse wenigstens eine Formschlussgeometrie, insbesondere eine Verbindungsnocke und/oder ein Rastabsatz, ausgebildet. An der Leiterplatte ist wenigstens eine Gegenformschlussgeometrie, insbesondere eine Öffnung und/oder eine Rastnase, ausgebildet. Die wenigstens eine Form- und Gegenformschlussgeometrie greifen zur Verbindung der Leiterplatte mit dem Gehäuse ineinander.

An der wenigstens einen Gegenformschlussgeometrie kann je ein elektrisches Leiterplattenkontaktelement, beispielsweise ein Metallring, zur elektrisch leitenden Verbindung der Leiterplatte mit dem Gehäuse ausgebildet sein. Besteht das Gehäuse wenigstens teilweise, insbesondere vollständig, aus Metall, können dadurch in vorteilhafter Weise leitungsgebundene Hochfrequenzstörungen von der Leiterplatte zu dem Gehäuse geleitet werden.

Bei der Montage des Sensors kann somit zunächst die Leiterplatte und/oder das Sensorelement einfach mittels einer Rast-, Klick- oder Pressverbindung an dem Gehäuse fixiert werden. Anschließend kann ein Vergießen des Gehäuseinnenraumes mit einer Vergussmasse erfolgen. Als Vergussmasse können zum Beispiel eine thermoplastische Formmasse oder einem Gießharz verwendet werden. Die Leiterplatte und/oder das Sensorelement können von einer Vergussmasse vollständig umschlossen sein. Diese Ausführung dient dem Schutz der Leiterplatte und/oder an des Sensorelements vor schädigende Umwelteinflüssen. Dadurch handelt es sich um einen flüssigkeits- oder fluiddichten Sensor, der insbesondere spritzwassergeschützt ist.

Zweckmäßig wird das Gehäuse mit Urformen, insbesondere Druckgießen, hergestellt. In einer Variante wird die Steckerhülse spanabhebend, insbesondere mit Drehen und/oder Fräsen, hergestellt.

In einer zusätzlichen Ausgestaltung ist das Sensorelement mittels eines elastischen Elementes, insbesondere einer Feder, befestigt, insbesondere ist das Sensorelement zwischen dem Gehäuse und dem elastischen Element elastisch vorgespannt gehalten.

Zweckmäßig umfasst der Sensor einen Lichtleiter und einen Lichtsender, z. B. eine LED, so dass von dem Lichtsender durch den Lichtleiter das von dem Lichtsender erzeugte Licht außerhalb des Sensors leitbar ist. Vorzugsweise ist der Lichtleiter außenseitig an zwei oder drei Seiten des Sensors angeordnet, so dass das von dem Lichtsender ausgestrahlte Licht an zwei oder drei Seiten des Sensors sichtbar ist.

Im Nachfolgenden werden Ausführungsbeispiele der Erfindung unter Bezugnahme auf die beigefügten Zeichnungen näher beschrieben. Es zeigt:
- Fig. 1: eine Draufsicht eines Gehäuses des Sensors in einem ersten Ausführungsbeispiel,
- Fig. 2: eine Seitenansicht des Gehäuses gemäß Fig. 1,
- Fig. 3: einen Längsschnitt B-B des Gehäuses gemäß Fig. 1,
- Fig. 4: einen Querschnitt A-A des Gehäuses gemäß Fig. 1,
- Fig. 5: einen Querschnitt C-C des Gehäuses gemäß Fig. 1,
- Fig. 6: eine Seitenansicht einer Steckerhülse in einem ersten Ausführungsbeispiel,
- Fig. 7: einen Querschnitt D-D der Steckerhülse gemäß Fig. 6,
- Fig. 8: einen Querschnitt E-E der Steckerhülse gemäß Fig. 6,
- Fig. 9: einen Querschnitt des Gehäuses an einer Steckeröffnung und der Steckerhülse in einem Vergleichsbeispiel,
- Fig. 10: einen Querschnitt des Gehäuses an der Steckeröffnung und der Steckerhülse in einem Vergleichsbeispiel,
- Fig. 11: eine Draufsicht einer Leiterplatte des Sensors,
- Fig. 12: eine Rückansicht der Leiterplatte gemäß Fig. 11,
- Fig. 13: einen Längsschnitt des Sensors und
- Fig. 14: eine perspektivische Ansicht des Sensors gemäß Fig. 13.

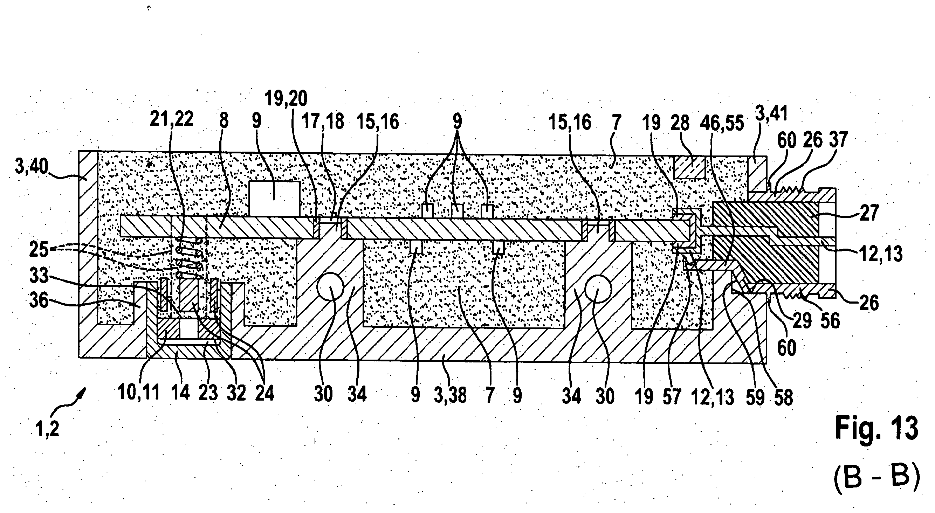

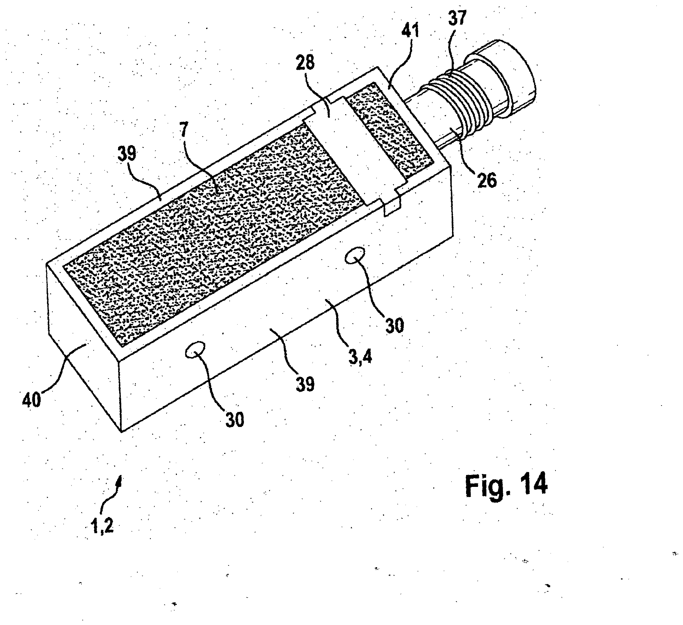

Ein in Fig. 13 und 14 dargestellter Sensor 1 ist als ein induktiver Sensor 2 ausgebildet und stellt damit einen Näherungssensor dar. Mit dem induktiven Sensor 2 können dadurch als Näherungssensor Gegenstände im Bereich oder in der Nähe des induktiven Sensors 2 erfasst werden.

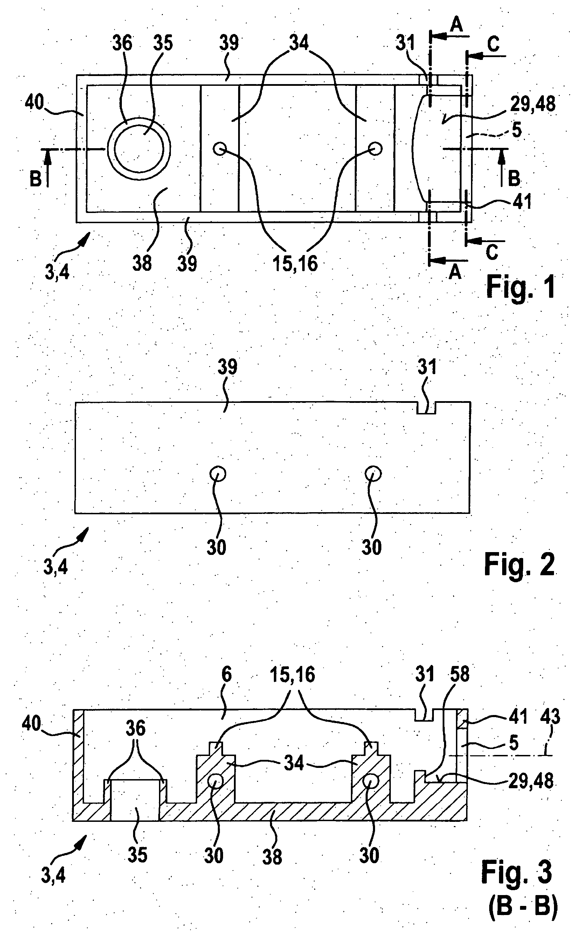

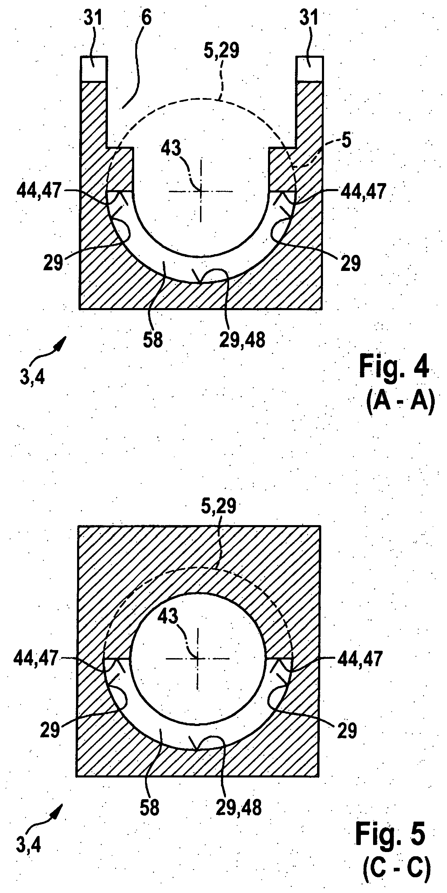

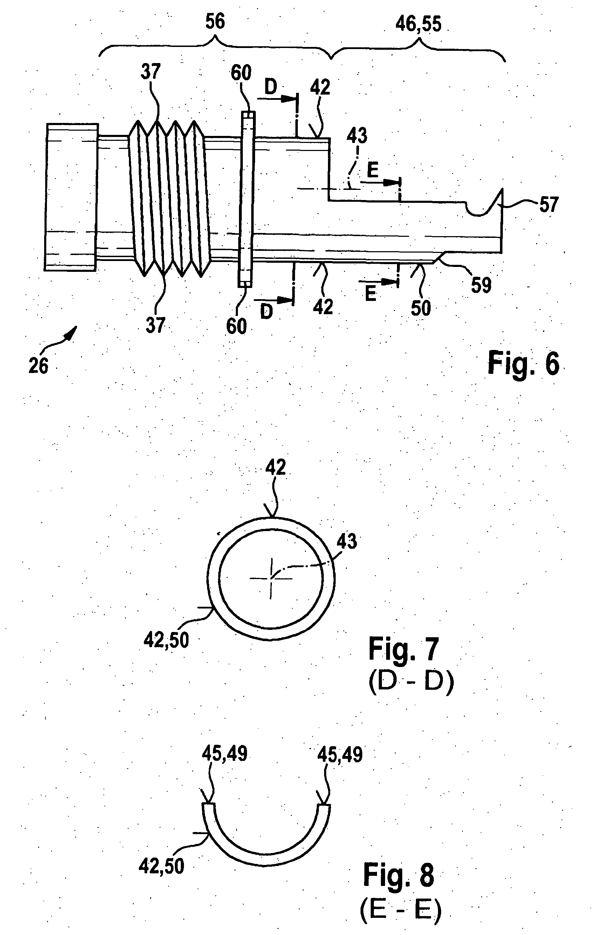

Der Sensor 1 umfasst ein Gehäuse 3, welches als ein Gehäusetopf 4 ausgebildet ist. Das Gehäuse 3 besteht aus Metall, nämlich einer Zinklegierung, und ist mittels eines Zinkdruckgussverfahrens mit einem Spritzgussverfahren hergestellt. Der Gehäusetopf 4 (Fig. 1 bis 3 sowie 13 und 14) schließt einen Gehäuseinnenraum 6 ein. Der Gehäuseinnenraum 6 ist dabei von einer Bodenwandung 38, zwei Seitenwandungen 39, einer Vorderwandung 40 und einer Rückwandung 41 des Gehäusetopfes 4 begrenzt (Fig.1). Der Gehäusetopf 4 weist ferner an der Rückwandung 41 eine Steckeröffnung 5 auf. Die Steckeröffnung 5 dient zur Einführung einer Steckerhülse 26 (Fig.6). Dabei ist, wie in Fig. 4 gezeigt, an dem Gehäuse 3 im Bereich der Steckeröffnung 5 untenseitig eine konkave Führungsfläche 29 ausgebildet. Die Führungsfläche 29 dient zur axialen Führung der Steckerhülse außenseitig an einer komplementären konvexen Führungsgegenfläche 42 der Steckerhülse 26.

Die in Fig. 6 gezeigte Steckerhülse 26 weist außenseitig eine im Querschnitt kreisförmige bzw. eine zylinderförmige Führungsfläche 42 auf. Die Steckeröffnung 5 weist eine im Querschnitt kreisförmige bzw. eine zylinderförmige Führungsfläche 29 auf. Die Führungsfläche 42 der Steckerhülse 26 liegt nach dem Einschieben der Steckerhülse 26 in die Steckeröffnung 5 auf der Führungsfläche 29 der Steckeröffnung 5 auf. Dadurch ist die Steckerhülse 26 in axialer Richtung, d. h. in Richtung einer Längsachse 43 der Steckerhülse 26 an der Steckeröffnung 5 geführt.

Die Steckeröffnung 5 weist zwei Absätze 47 (Fig. 4 und 5) in Richtung der Längsachse 43 auf. Unterhalb der beiden Absätze 47 bildet damit die Führungsfläche 29 des Gehäuses 3 zusätzlich eine Auflagefläche 48.

Am hinteren Ende der Auflagefläche 48 ist ein Anschlag 58 ausgebildet. Der Anschlag 58 begrenzt die Auflagefläche 48 unterhalb der beiden Absätze 47 in Richtung zu den beiden Gehäuseabsätzen 34 (Fig. 4, 5 und 13). Der Anschlag 58 ist halbkreisförmig ausgebildet.

Die Steckerhülse 26 ist in einen vorderen Abschnitt 55 und in einen hinteren Abschnitt 56 unterteilt. Der hintere Abschnitt 56 (Fig. 7) ist im Querschnitt kreisförmig und der vordere Abschnitt 55 ist im Querschnitt halbkreisförmig ausgebildet (Fig. 8). Der vordere Abschnitt 55 bildet dadurch ein Schubladenelement 46, welches im unteren Bereich eine Gegenauflagefläche 50 aufweist, die ebenfalls halbkreisförmig ausgebildet ist. Das Schubladenelement 46 weist im oberen Bereich zwei Drehkonterflächen 49 auf.

An dem vorderen Abschnitt 55 bzw. an dem Schubladenelement 46 sind ferner eine Verbindungsnase 57 und eine Rampe 59 ausgebildet. Zur Verbindung der Steckerhülse 26 mit dem Gehäuse 3 wird die Steckerhülse 26 beginnend mit dem vorderen Abschnitt 55 in die Steckeröffnung 5 eingeschoben. Dabei liegt die Gegenauflagefläche 50 des Schubladenelementes 46 auf der Auflagefläche 48 des Gehäuses 3 auf und die beiden Drehkonterflächen 49 des Schubladenelementes 46 liegen auf den beiden Absätzen 47 an der Steckeröffnung 5 auf. Die Auflagefläche 48 ist dabei entsprechend komplementär kreissegmentförmig zu der Gegenaüflagefläche 50 an dem Schubladenelement 46 ausgebildet. Die beiden Drehkonterflächen 49 sind mit einer planen Fläche zur Auflage auf einer planen Fläche des Absatzes 47 ausgebildet.

Die beiden Absätze 47 bilden dadurch Hülsenformschlussgeometrien 44 an dem Gehäuse 3. Die beiden Drehkonterflächen 49 an der Steckerhülse 26 bilden Hülsengegenformschlussgeometrien 45 der Steckerhülse 26. Dadurch wird beim Einführen der Steckerhülse 26 in die Steckeröffnung 5 mittels der Hülsenformschlussgeometrien 44 und der Hülsengegenformschlussgeometrien 45 die Steckerhülse 26 formschlüssig drehgesichert mit dem Gehäuse 3 verbunden. Die Drehsicherung betrifft dabei eine Drehachse, welcher der Längsachse 43 der Steckerhülse 26 und der Steckeröffnung 5 entspricht.

Die Steckerhülse 26 wird bis zu dem Anschlag 58 an dem Gehäuse 3 eingeführt, so dass die Rampe 59 (Fig. 6 und 13) auf dem Anschlag 58 aufliegt. Sowohl der Anschlag 58 als auch die Rampe 59 sind in einem spitzen Winkel zu der Längsachse 43 und im Querschnitt halbkreisförmig ausgebildet. Zur Herstellung einer Pressverbindung zwischen der Steckerhülse 26 und der Steckeröffnung 5 wird auf das hintere Ende der Steckerhülse 26 eine entsprechend große Druckkraft in Richtung der Längsachse 43 aufgebracht und das Gehäuse 3 mit einer entsprechenden großen Gegenkraft gehalten, so dass dadurch die Rampe 59 an der Steckerhülse 26 auf den Anschlag 58 aufgepresst wird. Dadurch kommt es zu einer elastischen Verformung des Anschlages 58 und der Rampe 59 Dadurch liegt die elastisch verformte Rampe 59 unter einer entsprechenden elastischen Vorspannung auf dem Anschlag 58 auf. Die axiale Führung und die Kräfte zur Aufnahme dieser Vorspannung können dabei von der Führungsgegenfläche 42 außenseitig an der Steckerhülse 26 auf die Führungsfläche 29 an der Steckeröffnung 5 auf das Gehäuse 3 überragen werden. Dadurch kann in einfacher Weise eine Pressverbindung zwischen der Steckerhülse 26 und dem Gehäuse 3 hergestellt werden.

Außeriseitig an der Steckerhülse 26 ist zusätzlich ein Pressring 60 ausgebildet, welcher mit dem äußeren Ende des Gehäuses 3 bzw. der Steckeröffnung 5 zusätzlich verpresst wird. Dadurch kann mit dem Pressring 60 eine zusätzliche Pressverbindung hergestellt werden.

Die Verbindungsnase 57 an der Steckerhülse 26 dient nach dem Erhärten der Vergussmasse 7 zur zusätzlichen axialen Verbindung der Steckerhülse 26 mit dem Gehäuse 3, da die Verbindungsnase 57 formschlüssig an der erhärteten Vergussmasse 7 befestigt ist und die Vergussmasse 7 mit dem Gehäuse 3 verbunden ist.

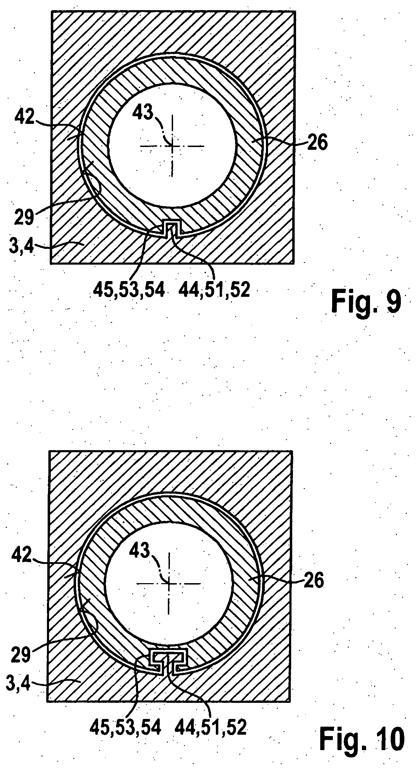

In Fig. 9 ist ein Vergleichsbeispiel für die Steckeröffnung 5 und die Steckerhülse 26 dargestellt. Dabei unterscheidet sich dieses zweite Ausführungsbeispiel von dem oben beschriebenen ersten Ausführungsbeispiel nur in der Ausbildung der Hülsenformschlussgeometrie 44 und der Hülsengegenformschlussgeometrie 45 zur Ausbildung der Drehsicherung der Steckerhülse 26 in der Steckeröffnung 5.

Die Hülsenformschlussgeometrie 44 ist ein als Zapfen 52 ausgebildeter Vorsprung 51. Die Hülsengegenformschlussgeometrie 45 an der Steckerhülse 26 ist eine als Schlitz 54 ausgebildete Aussparung 53. Beim Einführen der Steckerhülse 26 in die Steckeröffnung 5 erfolgt dadurch eine Drehsicherung aufgrund der Anordnung des Zapfens 52 in dem Schlitz 54. Die axiale Führung der Steckerhülse 26 an der Steckeröffnung 5 wird in analoger Weise zum ersten Ausführungsbeispiel durch die Führungsfläche 29 an der Steckeröffnung 5 und die Führungsgegenfläche 42 an der Steckerhülse 26 ausgebildet. Die Pressverbindung wird ebenfalls analog zu dem ersten Ausführungsbeispiel ausgeführt.

Das in Fig. 10 dargestellte Vergleichsbeispiel unterscheidet sich von dem in Fig. 9 dargestellten zweiten Ausführungsbeispiel nur dadurch, dass der Vorsprung 51 der Hülsenformschlussgeometrie 44 und die Aussparung 53 der Hülsengegenformschlussgeometrie 45 im Querschnitt T-förmig ausgebildet sind.

Das Steckerteil 27 aus Kunststoff ist auch oberhalb des vorderen Abschnittes 55 bzw. des Schubladenelementes 46 an der Steckerhülse 26 vorhanden Das Steckerteil 27 dient zur elektrischen Verbindung der Leiterplattenkontaktelemente 19 mit den elektrischen Kontaktelementen 13 an dem Steckerteil 27.

In Fig. 13 ist eine Klemmverbindung zwischen den am linken Ende gabelförmigen elektrischen Kontaktelementen 13 zu den Leiterplattenkontaktelementen 19 dargestellt.

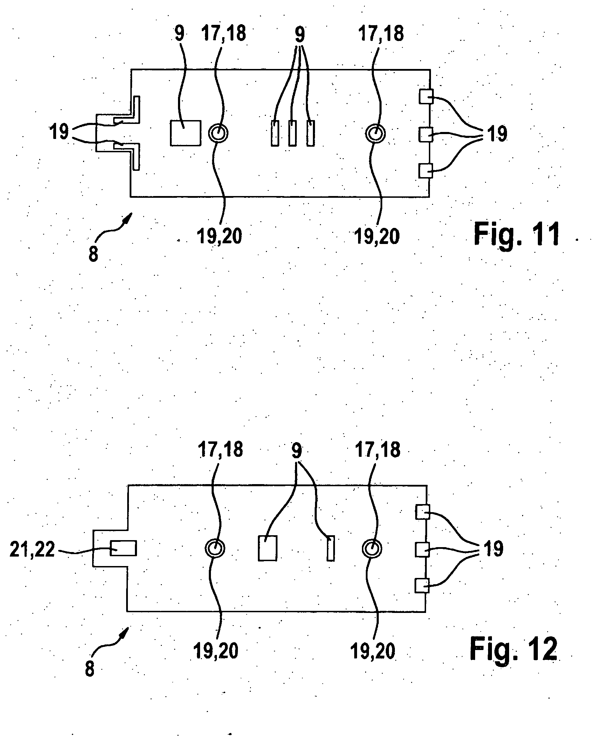

Abweichend von den in Fig. 13 dargestellten Leiterplattenkontaktelementen 19 können die Leiterplattenkontaktelemente 19 sowie die Leiterplatte 8 am rechten Ende gemäß der Darstellung in Fig. 11 und 12 Ausnehmungen aufweisen. Innerhalb dieser Ausnehmungen sind die elektrischen Kontaktelemente 13 angeordnet. Dabei sind die elektrischen Kontaktelemente 13 mit den Leiterplattenkontaktelementen 19 verlötet. In vorteilhafter Weise können die innerhalb des Schubladenelementes 46 angeordneten elektrischen Kontaktelementen 13 durch den offenen Querschnitt des vorderen Abschnitts 55 gelötet werden. Die Steckerhülse 26 benötigt dadurch für das Steckerteil 27 innerhalb des Gehäuseinnenraumes 6 weniger Bauraum in Richtung der Längsachse 43. Damit kann der Gehäusetopf 4 und damit das Gehäuse 3 des Sensors 1 in der Längsachse verkleinert werden. Der erfindungsgemässe Sensor 1 weist damit in vorteilhafter Weise eine geringere Einbautiefe auf.

Die Leiterplatte 8 ist wie folgt in dem Gehäuse 3 positioniert:
An der Bodenwandung 38 sind in Querrichtung zwei Gehäuseabsätze 34 ausgebildet. Oberseitig an den Gehäuseabsätzen 34 ist zur Auflage der Leiterplatte 8 jeweils einer Verbindungsnocke 16 als Formschlussgeometrie 15 ausgebildet. In die beiden Absätze 34 ist jeweils in Querrichtung eine Befestigungsbohrung 30 vorhanden. Die Befestigungsbohrungen 30 weisen vorzugsweise ein Gewinde auf. Die Bodenwandung 38 weist ferner eine Kappenöffnung 35 auf. An der Kappenöffnung 35 weist das Gehäuse 3 einen Kappenring 36 (Fig. 1, 3 und 13) auf.

Die beiden Seitenwandungen 39 weisen außerdem obenseitig zwei Gehäuseaussparungen 31 für einen Lichtleiter 28 auf.

An der Leiterplatte 8 (Fig. 11 und 12) sind oberseitig vier Elektronikkomponenten 9, zum Beispiel ein Controller und ein elektrischer Widerstand, mechanisch und elektrisch mit der Leiterplatte 8 verbunden. Die Leiterplatte 8 weist hierzu nicht dargestellte Leiterbahnen auf. An der Unterseite der Leiterplatte 8 (Fig. 12) sind zwei Elektronikkomponenten 9 mit der Leiterplatte 8 mechanisch und elektrisch verbunden. Die Leiterplatte 8 aus Kunststoff weist zwei Öffnungen 18 auf, die eine Gegenformschlussgeometrie 17 bilden. Dabei sind an diesen Öffnungen 18 der Leiterplatte 8 zusätzlich Metallringe 20 als Leiterplattenkontaktelemente 19 angeordnet. Ferner ist an der Unterseite der Leiterplatte 8 eine Feder 22 als elastisches Element 21, zum Beispiel mittels einer Lötverbindung, befestigt. Die Leiterplatte 8 weist ferner an der Oberseite, gemäß der Darstellung in Figur 11 rechts, drei Leiterplattenkontaktelemente 19 auf. Die in Fig. 11 rechts dargestellten drei Leiterplattenkontaktelemente 19 sind im Querschnitt U-förmig (Fig. 13) ausgebildet und dadurch auch an der Unterseite vorhanden und damit auch in Fig. 12 sichtbar.

Bei der Herstellung des Sensors 1 wird der Gehäusetopf 4 aus einer Zinklegierung mittels eines Zinkdruckgussverfahrens hergestellt. Dadurch kann die oben beschriebene Geometrie des Gehäusetopfes 4, zum Beispiel mit den Gehäuseabsätzen 34 und der Kappenöffnung 35 mit dem Kappenring 36, bereits einfach beim Druckgussverfahren mit hergestellt werden, ohne dass anschließend eine Nachbearbeitung, zum Beispiel spanabhebend, erforderlich ist. Anschließend wird in die Kappenöffnung 35 an der Bodenwandung 38 des Gehäuses 3 eine Kappe 14 aus Kunststoff eingeschoben und eingedrückt, sodass ein form- und/oder kraftschlüssige Verbindung zwischen der Kappe 14 und dem Kappenring 36 an dem Gehäuse 3 hergestellt wird. Der Kappenring 36 stellt dabei eine relativ große Verbindungsfläche zwischen der Kappe 14 und dem Gehäuse 3, das heißt dem Kappenring 36, zur Verfügung. Anschließend wird die Steckerhülse 26 aus Metall in die Steckeröffnung 5 an der Rückwandung 41 eingeschoben und mit dem Gehäuse 3 an der Steckeröffnung 5 verbunden.

Nach der Herstellung der Verbindung zwischen der Steckerhülse 26 und dem Gehäuse 3 wird in die Steckerhülse 26 ein Steckerteil 27 aus Kunststoff eingeschoben. Das Steckerteil 27 ist aus thermoplastischem Kunststoff mittels Spritzgießen hergestellt und dabei sind drei elektrische Kontaktelemente 13 als elektrische Kontakte 12 von dem Kunststoff des Steckerteils 27 umspritzt. Die elektrischen Kontaktelemente 13 dienen dazu, den Sensor 1 elektrisch mit der Umgebung zu verbinden. Dabei sind in das Steckerteil 27 drei elektrische Kontaktelemente 13 integriert, von denen jedoch aufgrund der Schnittbildung in Fig. 13 nur ein elektrisches Kontaktelement 13 dargestellt ist. Die elektrischen Kontaktelemente 13 sind an dem in Fig. 13 dargestellten rechten Ende außerhalb des Sensors 1 angeordnet und können dadurch mit entsprechenden elektrischen Kontaktgegenelementen (nicht dargestellt) mechanisch und elektrisch verbunden werden. Hierzu ist ein entsprechender elektrischer Gegensteckverbinder (nicht dargestellt) auf ein Außengewinde 37 der Steckerhülse 26 aufzuschrauben. Dadurch können die elektrischen Kontäktgegenelemente mit den elektrischen Kontaktelementen 13 verbunden werden. Das Steckerteil 27 wird dabei form- und/oder kraftschlüssig, zum Beispiel mittels einer Rastverbindung, mit der Steckerhülse 26 verbunden.

Anschließend wird eine Spule 11 als Sensorelement 10 für den induktiven Sensor 2 auf die Kappe 14 aufgelegt. Die Kappe 14 weist dabei eine entsprechende Geometrie auf, sodass sich an der Kappe 14 innenseitig eine Ausnehmung 23 ausbildet, die komplementär zur Geometrie der Spule 11 ausgebildet ist. Damit ist in der Ausnehmung 23 der Kappe 14 die Spule 11 formschlüssig gehalten.

Darauffolgend wird die Leiterplatte 8 auf das Gehäuse 3 aufgelegt, indem zunächst die beiden Verbindungsnocken 16 in die beiden Öffnungen 18 der Leiterplatte 8 eingeführt und anschließend die Leiterplatte 8 auf den beiden Gehäuseabsätzen 34 aufgelegt wird. Dadurch besteht eine formschlüssige Verbindung zwischen der Leiterplatte 8 und dem Gehäuse 3 an den Verbindungsnocken 16 sowie den Gehäuseabsätzen 34. Zusätzlich wird noch mittels eines entsprechenden Werkzeugs eine Pressverbindung zwischen den Verbindungsnocken 16 und der Öffnung 18 an der Leiterplatte 8, das heißt den Metallringen 20 an der Leiterplatte 8, hergestellt. Dadurch kommt es zu einer kraftschlüssigen Verbindung zwischen dem Gehäuse 3 und der Leiterptatte 8.

Beim Auflegen der Spule 11 auf die Kappe 14 befindet sich bereits auf einem zweiten Ende 33, als oberem Ende gemäß der Darstellung in Fig. 11, auf der Spule 11 ein Zwischenteil 24 aus Kunststoff. Beim Auflegen der Leiterplatte 8 auf das Gehäuse 3 wird dadurch die Feder 22 auf das Zwischenteil 24 aufgelegt und die Feder 22 elastisch vorgespannt, sodass dadurch mittels des Zwischenteils 24 die Spule 11 mittelbar mit der Feder 22 elastisch vorgespannt an der Leiterplatte 8 befestigt ist. Ein erstes Ende 32 des Sensorelements 10 als Spule 11 liegt dabei auf der Kappe 14 auf und das erste Ende 32 stellt gemäß der Darstellung in Fig. 11 ein unteres Ende der Spule 11 dar.

Die Spule 11 ist damit unter Vorspannung zwischen der Leiterplatte 8 und der Kappe 14 befestigt. Dadurch sind sowohl die Leiterplatte 8 als auch das Sensorelement 10 vor einem Vergießen mit einer Vergußmasse 7 bezüglich des Gehäuses 3 positioniert und daran befestigt.

Zur elektrischen Verbindung der Spule 11 mit der Leiterplatte 8 weist die Spule 11 zwei Kontaktelemente 25 auf, die in Fig. 13 strichliert dargestellt sind: Diese Kontaktelemente 25 der Spule 11 werden anschließend mit den beiden in Fig. 11 links dargestellten Leiterplattenkontaktelementen 19 verlötet, sodass dadurch die Spule 11 elektrisch und geringfügig mechanisch mit der Leiterplatte 8 bzw. den Leiterplattenkontaktelementen 19 verbunden ist. Zusätzlich werden auch die drei elektrischen Kontaktelemente 13 an dem Steckerteil 27, deren linkes inneres Ende in dem von dem Gehäuse 3 eingeschlossenen Gehäuseinnenraum 6 enden, mit den drei in Fig. 11 und 12 rechts dargestellten Leiterplattenkontaktelementen 19 verlötet, sodass dadurch die Leiterplatte 8 elektrisch mit den drei elektrischen Kontaktelementen 13 verbunden ist und damit auch der Sensor 1 bezüglich der elektrischen Verbindung nach außen hergestellt ist.

Vor einem Vergießen des Gehäuseinnenraumes 6 mit einer Vergussmasse 7 wird ferner ein Lichtleiter 28 aus einem lichtleitenden Kunststoff mit den beiden Gehäuseaussparungen 31 an den beiden Seitenwandungen 39 oberseitig verbunden Dies kann zum Beispiel mittels einer Clips- oder Rastverbindung erfolgen. Anschließend kann der Gehäuseinnenraum 6 mit der Vergussmasse 7 ausgegossen werden, sodass dadurch die Leiterplatte 8 und das Sensorelement 10 vollständig von der Vergussmasse 7 umschlossen sind. Dadurch stellt der Sensor 1 einen fluiddichten Sensor 1 dar.

Insgesamt betrachtet sind mit dem erfindungsgemäßen Sensor 1 und dem erfindungsgemäßen Verfahren zur Herstellung des Sensors 1 wesentlichen Vorteile verbunden. Die Steckerhülse 26 ist formschlüssig drehgesichert mit der Steckeröffnung 5 an dem Gehäuse 3 verbunden. Die Pressverbindung zwischen der Steckerhülse 26 und dem Gehäuse 3 dient somit nur dazu, eine axiale Fixierung der Steckerhülse 26 an dem Gehäuse 3 herzustellen. Die Pressverbindung kann wesentlich kleiner ausgeführt werden, weil eine geringere Pressfläche zwischen der Steckerhülse 26 und dem Gehäuse 3 erforderlich ist.

Der Gehäuseinnenraum 6 oberhalb des Schubladenelementes 46 bzw. des vorderen Abschnitts 55 der Steckerhülse 26 ist von dem Steckerteil 27 ausgefüllt. Dadurch kann der Gehäuseinnenraum 6 beginnend von der Rückwandung 41 in Richtung zu der Vorderwand 40 zur Herstellung der elektrischen Verbindung zwischen den elektrischen Kontaktelementen 13 und den Leiterplattenkontaktelementen 19 genutzt werden. Durch den offenen Querschnitt des vorderen Abschnitts 55 der Steckerhülse 26 können die elektrischen Kontaktelementen 13 gelötet werden.

Die Steckerhülse 26 mit dem Steckerteil 27 benötigt dadurch wenig axialen Bauraum in Richtung der Längsachse 43, so dass dadurch insgesamt die Länge des Gehäuses 3 des Sensors 1 wesentlich reduziert ist.

## Patentansprüche

1. Sensor (1), umfassend wenigstens
ein Gehäuse (3) mit einer Steckeröffnung (5), welches einen Gehäuseinnenraum (6) einschließt,
eine Steckerhülse (26), welche mit dem Gehäuse (3) an der Steckeröffnung (5) verbunden ist,
eine Leiterplatte (8) mit Elektronikkomponenten (9), welche innerhalb des Gehäuseinnenraumes (6) angeordnet ist,
ein Sensorelement (10), welches innerhalb des Gehäuseinnenraumes (6) angeordnet ist,
wobei
die Steckerhülse (26) in einen vorderen Abschnitt (55) und in einen hinteren Abschnitt (56) unterteilt ist, wobei der vordere Abschnitt (55) im Querschnitt offen und der hintere Abschnitt (56) im Querschnitt geschlossen ist, an der Steckeröffnung (5) des Gehäuses (3) wenigstens eine Hülsenformschlussgeometrie (44) ausgebildet ist und
an der Steckerhülse (26) wenigstens eine Hülsengegenformschlussgeometrie (45) ausgebildet ist, wobei die Hülsenformschlussgeometrie (44) und die Hülsengegenformschlussgeometrie (45) ausgebildet sind, wenigstens in formschlüssiger Wirkverbindung miteinander zu stehen, so dass die Steckerhülse (26) drehgesichert mit dem Gehäuse (3) verbunden ist, **dadurch gekennzeichnet, dass** der vordere Abschnitt (55) und wenigstens ein Teil des angrenzenden hinteren Abschnitts (56) der Steckerhülse (26) als ein Schubladenelement (46) ausgebildet ist.

2. Sensor nach Anspruch 1, **dadurch gekennzeichnet, dass** die Hülsenformschlussgeometrie (44) zwei Absätze (47) und eine Auflagefläche (48) aufweist und wenigstens ein Teil des Schubladenelementes (46) mit zwei Drehkonterflächen (49) und einer Gegenauflagefläche (50) als Hülsengegenformschlussgeometrie (45) ausgebildet ist, wobei die zwei Drehkonterflächen (49) auf den zwei Absätzen (47) aufliegen und die Auflagefläche (48) auf der Gegenauflagefläche (50) aufliegt.

3. Sensor nach Anspruch 2, **dadurch gekennzeichnet, dass** die Auflagefläche (48) und die Gegenauflagefläche (50) im Querschnitt im Wesentlichen kreissegmentförmig und/oder U-förmig, insbesondere halbkreisförmig, ausgebildet ist und/oder das Schubladenelement (46) im Querschnitt im Wesentlichen kreissegmentförmig und/oder U-förmig, insbesondere halbkreisförmig, ausgebildet ist.

4. Sensor nach einem der vorhergehenden Ansprüche, **dadurch gekennzeichnet, dass** die Steckerhülse (26) kraftschlüssig, insbesondere mit einer Pressverbindung, axial mit dem Gehäuse (3) verbunden ist.

5. Sensor nach einem der vorhergehenden Ansprüche, **dadurch gekennzeichnet, dass** die wenigstens eine Hülsenformschlussgeometrie (44) an dem vorderen Abschnitt (55) der Steckerhülse (26) ausgebildet ist, wobei der vordere Abschnitt (55) der Steckerhülse (26) wenigstens teilweise, insbesondere vollständig, innerhalb des Gehäuseinnenraumes (6) angeordnet ist.

6. Sensor nach einem der vorhergehenden Ansprüche, **dadurch gekennzeichnet, dass** an der Steckerhülse (26), insbesondere dem vorderen Abschnitt (55) der Steckerhülse (26), eine Verbindungsnase (57) ausgebildet ist, wobei die Verbindungsnase (57) vorzugsweise von einer erhärteten Vergussmasse (7) umschlossen ist, so dass dadurch die Steckerhülse (26) axial formschlüssig mit der erhärteten Vergussmasse (7) verbunden ist.

7. Sensor nach einem der vorhergehenden Ansprüche, **dadurch gekennzeichnet, dass** in dem vorderen Abschnitt (55) der Steckerhülse (26) ein Steckerteil (27) mit elektrischen Kontaktelementen (13) angeordnet ist, wobei die elektrischen Kontaktelementen (13) mechanisch und elektrisch mit Leiterplattenkontaktelementen (19), vorzugsweise mit einer Löt- oder Klemmverbindung, verbunden sind, wobei eine Leiterplatte (8) Ausnehmungen aufweist, innerhalb deren die elektrischen Kontakte (12) des Steckerteils (27) angeordnet sind, zur elektrischen Verbindung und der elektrischen Kontaktelementen (13) mit den Leiterplattenkontaktelementen (19).

8. Verfahren zur Herstellung eines Sensors (1), insbesondere eines Sensors (1) gemäß einem oder mehreren der vorhergehenden Ansprüche, mit den Schritten:
zur Verfügung stellen eines Gehäuses (3) mit einer Steckeröffnung (5),
zur Verfügung stellen einer Steckerhülse (26) und eines Steckerteils (27),
zur Verfügung stellen einer Leiterplatte (8) mit Elektronikkomponenten (9),
zur Verfügung stellen eines Sensorelementes (10) und mit elektrischen Kontakten (12),
Einführen der Leiterplatte (8) und des Sensorelements (10) in einen von dem Gehäuse (3) eingeschlossenen Gehäuseinnenraum (6),
Einführen der Steckerhülse (26) in die Steckeröffnung (5) des Gehäuses (3) und Verbinden der Steckerhülse (26) mit dem Gehäuse (3),
Verbinden der Leiterplatte (8) und/oder des Sensorelementes (10) mit dem Gehäuse (3),
Einführen der Steckerhülse (26) in die Steckeröffnung (5) des Gehäuses (3),
wobei
die Steckerhülse (26) in einen vorderen Abschnitt (55) und in einen hinteren Abschnitt (56) unterteilt ist, wobei der vordere Abschnitt (55) im Querschnitt offen und der hintere Abschnitt (56) im Querschnitt geschlossen ist, wobei der vordere Abschnitt (55) und wenigstens ein Teil des angrenzenden hinteren Abschnitts (56) der Steckerhülse (26) als ein Schubladenelement (46) ausgebildet ist,
wobei an der Steckeröffnung (5) des Gehäuses (3) wenigstens eine Hülsenformschlussgeometrie (44) ausgebildet ist und
an der Steckerhülse (26) wenigstens eine
Hülsengegenformschlussgeometrie (45) ausgebildet ist,
wobei die Hülsenformschlussgeometrie (44) und die
Hülsengegenformschlussgeometrie (45) ausgebildet sind, wenigstens in formschlüssiger Wirkverbindung miteinander zu stehen, so dass die Steckerhülse (26) drehgesichert mit dem Gehäuse (3) verbunden ist und die Steckerhülse (26) in axialer Richtung form- und/oder kraftschlüssig, insbesondere mit einer Pressverbindung, mit dem Gehäuse (3) verbunden wird.

9. Verfahren zur Herstellung eines Sensors (1), **dadurch gekennzeichnet, dass** wenigstens ein Teil des hinteren Abschnitts (56) der Steckerhülse (26) innerhalb der Steckeröffnung (5) form und kraftschlüssig verbunden wird.

10. Verfahren nach Anspruch 8 oder 9, **dadurch gekennzeichnet, dass** die Steckerhülse (26) bis zu einem Anschlag (58) in die Steckeröffnung (5) eingeschoben wird und anschließend auf die Steckerhülse (26) eine axiale Druckkraft aufgebracht wird, so dass dadurch die Steckerhülse (26) mit einer Pressverbindung mit dem Gehäuse (3) verbunden wird.

11. Verfahren zur Herstellung eines Sensors (1), **dadurch gekennzeichnet, dass** der Gehäuseinnenraum (6) mit einer Vergussmasse (7) vergossen wird und die Vergussmasse (7) anschließend erhärtet, wobei ein an der Steckerhülse (26), insbesondere dem vorderen Abschnitt (55) der Steckerhülse (26), ausgebildete Verbindungsnase (57) von der erhärteten Vergussmasse umschlossen ist, so dass dadurch die Steckerhülse (26) axial formschlüssig mit der erhärteten Vergussmasse (7) verbunden ist und somit axial innerhalb des Gehäuseinnenraums (6) fixiert ist.

## Claims

1. Sensor (1), comprising at least
one housing (3) with a connector opening (5) which encloses a housing interior (6),
a connector sleeve (26) which is connected to the housing (3) at the connector opening (5),
a printed circuit board (8) with electronic components (9) which is located within the housing interior (6),
a sensing element (10) which is located inside the housing interior (6), whereby
the connector sleeve (26) is subdivided into a front section (55) and a rear section (56),
whereby the cross-section of the front section (55) is open and the cross-section of the rear section (56) is closed, at the connector opening (5) of the housing (3) at least one sleeve positive connection geometry (44) is formed and
at the connector sleeve (26) at least one sleeve counter-positive connection geometry (45) is formed,
whereby the sleeve positive connection geometry (44) and the sleeve counter-positive connection geometry (45) are formed and at least have a positive operative connection with each other, so that the connector sleeve (26) is connected to the housing (3) in such a way that it cannot rotate, **characterized in that** the front section (55) and at least part of the adjacent rear section (56) of the connector sleeve (26) is formed as a drawer element (46).

2. Sensor in accordance with Claim 1, **characterized in that** the sleeve positive connection geometry (44) has two shoulders (47) and a contact surface (48), and at least one part of the drawer element (46) with two rotating counter-surfaces (49) and a counter-contact surface (50) is designed as a sleeve counter-positive connection geometry (45), whereby the two rotating counter-surfaces (49) rest on the two shoulders (47) and the contact surface (48) rests on the counter-contact surface (50).

3. Sensor in accordance with Claim 2, **characterized in that** the cross-section of the contact surface (48) and the counter-contact surface (50) is essentially designed to be circle segment-shaped and/or U-shaped, in particular in a semi-circular shape, and/or the cross-section of the drawer element (46) is essentially designed to be circle segment-shaped and/or U-shaped, in particular in a semi-circular shape.

4. Sensor in accordance with one of the above Claims, **characterized in that** the connector sleeve (26) is frictionally connected, in particular with a press fit, axially to the housing (3).

5. Sensor in accordance with one of the above Claims, **characterized in that** the at least one sleeve positive connection geometry (44) is formed at the front section (55) of the connector sleeve (26), whereby the front section (55) of the connector sleeve (26) is located at least partially, in particular fully, within the housing interior (6).

6. Sensor in accordance with one of the above Claims, **characterized in that** a connecting nose (57) is formed on the connector sleeve (26), in particular on the front section (55) of the connector sleeve (26), whereby the connecting nose (57) is preferably enclosed by a hardened sealing compound (7), so that the connector sleeve (26) thus forms an axial positive connection with the hardened sealing compound (7).

7. Sensor in accordance with one of the above Claims, **characterized in that** a connector part (27) with electrical contact elements (13) is located in the front section (55) of the connector sleeve (26), whereby the electrical contact elements (13) are connected mechanically and electrically to printed circuit board contact elements (19), preferably with a soldered or clamp connection, whereby a printed circuit board (8) has recesses within which the electrical contacts (12) of the connector part (27) are located for the electrical connection of the electrical contact elements (13) with the printed circuit board contact elements (19).

8. Process for producing a sensor (1), in particular a sensor (1) in accordance with one or more of the above Claims, with the following steps:
provision of a housing (3) with a connector opening (5),
provision of a connector sleeve (26) and a connector part (27),
provision of a printed circuit board (8) with electronic components (9),
provision of a sensing element (10) with electrical contacts (12),
insertion of the printed circuit board (8) and of the sensing element (10) into a housing interior (6) enclosed by the housing (3),
insertion of the connector sleeve (26) into the connector opening (5) of the housing (3) and connection of the connector sleeve (26) with the housing (3),
connection of the printed circuit board (8) and/or of the sensing element (10) with the housing (3),
insertion of the connector sleeve (26) into the connector opening (5) of the housing (3),
whereby
the connector sleeve (26) is subdivided into a front section (55) and a rear section (56), whereby the cross-section of the front section (55) is open and
the cross-section of the rear section (56) is closed, whereby the front section (55) and at least a part of the adjacent rear section (56) of the connector sleeve (26) is formed as a drawer element (46)
whereby at least one sleeve positive connection geometry (44) is formed at the connector opening (5) of the housing (3) and
at least one sleeve counter-positive connection geometry (45) is formed at the connector sleeve (26),
whereby the sleeve positive connection geometry (44) and the sleeve counter-positive connection geometry (45) are formed and at least have a positive operative connection with each other, so that the connector sleeve (26) is connected to the housing (3) in such a way that it cannot rotate, and
the connector sleeve (26) is positively and/or frictionally connected, in particular with a press fit, to the housing (3) in an axial direction.

9. Process for producing a sensor (1), **characterized in that** at least one part of the rear section (56) of the connector sleeve (26) is positively and frictionally connected within the connector opening (5).

10. Process in accordance with Claims 8 or 9, **characterized in that** the connector sleeve (26) is pushed into the connector opening (5) as far as a limit stop (58) and that then an axial force is applied to the connector sleeve (26) so that the connector sleeve (26) is thus connected to the housing (3) by means of a press fit.

11. Process for producing a sensor (1), **characterized in that** the housing interior (6) is filled with a sealing compound (7) and the sealing compound (7) subsequently hardens, whereby a connecting nose (57) formed at the connector sleeve (26), in particular at the front section (55) of the connector sleeve (26), is enclosed by the hardened sealing compound, so that the connector sleeve (26) thus forms an axial positive connection with the hardened sealing compound (7) and is thus fixed axially within the housing interior (6).

## Revendications

1. Détecteur (1), comprenant au moins
un boîtier (3) pourvu d'une ouverture de connecteur (5), enfermant un espace intérieur de boîtier (6),
une douille de connecteur (26), raccordée au boîtier (3) au niveau de l'ouverture de connecteur (5),
une carte de circuit imprimé (8) dotée de composants électroniques (9), disposée à l'intérieur de l'espace intérieur de boîtier (6),
un élément de détection (10), disposé à l'intérieur de l'espace intérieur de boîtier (6),
où
la douille de connecteur (26) est divisée en une section avant (55) et une section arrière (56),
la section avant (55) étant ouverte en coupe transversale et la section arrière (56) étant fermée en coupe transversale, au moins une géométrie à conjugaison de forme de douille (44) étant conçue au niveau de l'ouverture de connecteur (5) du boîtier (3) et
au moins une géométrie à conjugaison de forme contraire de douille (45) étant conçue au niveau de la douille de connecteur (26),
la géométrie à conjugaison de forme de douille (44) et la géométrie à conjugaison de forme contraire de douille (45) étant conçues pour être en liaison active à conjugaison de forme l'une avec l'autre de sorte que la douille de connecteur (26) est raccordée au boîtier (3) sans possibilité de se mettre en rotation, **caractérisé en ce que** la section avant (55) et au moins une partie de la section arrière adjacente (56) de la douille de la fiche (26) est formée comme un élément de tiroir (46).

2. Détecteur selon la revendication 1, **caractérisé en ce que** la géométrie à conjugaison de forme (44) présente deux épaulements (47) et une surface d'appui (48) et au moins une partie de l'élément à tiroir (46) avec deux contre-surfaces de rotation (49) et une surface d'appui opposée (50) est conçue sous la forme d'une géométrie à conjugaison de forme contraire de douille (45), les deux contre-surfaces de rotation (49) s'appuyant sur les deux épaulements (47) et la surface d'appui (48) s'appuyant sur la surface d'appui opposée (50).

3. Détecteur selon la revendication 2, **caractérisé en ce que** la surface d'appui (48) et la surface d'appui opposée (50) sont conçues en coupe transversale essentiellement en forme de segment de cercle et/ou en forme de U, en particulier en forme de demi-cercle et/ou l'élément à tiroir (46) est conçu en coupe transversale essentiellement en forme de segment de cercle et/ou en forme de U, en particulier en forme de demi-cercle.

4. Détecteur selon l'une des revendications précédentes, **caractérisé en ce que** la douille de connecteur (26) est raccordée à force, en particulier avec une connexion serrée, axialement, au boîtier (3).

5. Détecteur selon l'une des revendications précédentes, **caractérisé en ce que** la au moins une géométrie à conjugaison de forme de douille (44) est conçue au niveau de la section avant (55) de la douille de connecteur (26), la section arrière (55) de la douille de connecteur (26) étant disposée au moins partiellement, en particulier entièrement, à l'intérieur de l'espace intérieur de boîtier (6).

6. Détecteur selon l'une des revendications précédentes, **caractérisé en ce qu'**au niveau de la douille de connecteur (26), en particulier au niveau de la section avant (55) de la douille de connecteur (26), est conçu un nez de raccordement (57), le nez de raccordement (57) étant entouré de préférence par un produit de scellement durci (7) ce qui permet à la douille de connecteur (26) d'être raccordée axialement par conjugaison de forme au produit de scellement durci (7).

7. Détecteur selon l'une des revendications précédentes, **caractérisé en ce qu'**une pièce de connecteur (27) avec des éléments de contact électriques (13) est disposée dans la section avant (55) de la douille de connecteur (26), les éléments de contact électriques (13) étant raccordés mécaniquement et électriquement aux éléments de contact de carte de circuit imprimé (19), de préférence avec une jonction par brasage ou par serrage, une carte de circuit imprimé (8) présentant des évidements, à l'intérieur desquels les contacts électriques (12) de la pièce de connecteur (27) sont disposés, pour le raccordement électrique des éléments de contact électriques (13) aux éléments de contact de la carte de circuit imprimé (19).

8. Procédé de fabrication d'un détecteur (1), en particulier d'un détecteur (1) selon une ou plusieurs des revendications précédentes, comprenant les étapes consistant à :
fournir un boîtier (3) doté d'une ouverture de connecteur (5),
fournir une douille de connecteur (26) et une pièce de connecteur (27),
fournir une carte de circuit imprimé (8) dotée de composants électroniques (9),
fournir un élément de détection (10) et, avec des contacts électriques (12),
insérer la carte de circuit imprimé (8) et l'élément de détection (10) dans un espace intérieur de boîtier (6) enfermé par le boîtier (3),
insérer la douille de connecteur (26) dans l'ouverture de connecteur (5) du boîtier (3) et raccorder la douille de connecteur (26) au boîtier (3),
raccorder la carte de circuit imprimé (8) et/ou l'élément de détection (10) au boîtier (3),
insérer la douille de connecteur (26) dans l'ouverture de connecteur (5) du boîtier (3),
la douille de connecteur (26) étant divisée en une section avant (55) et une section arrière (56), la section avant (55) étant ouverte en coupe transversale et la section arrière (56) étant fermée en coupe transversale, dans lequel la section avant (55) et au moins une partie de la section arrière adjacente (56) de la douille de la fiche (26) est formée comme un élément de tiroir (46) au moins une géométrie à conjugaison de forme de douille (44) étant conçue au niveau de l'ouverture de connecteur (5) du boîtier (3) et
au moins une géométrie à conjugaison de forme contraire de douille (45) étant conçue au niveau de la douille de connecteur (26),
la géométrie à conjugaison de forme de douille (44) et la géométrie à conjugaison de forme contraire de douille (45) étant conçues pour être en liaison active à conjugaison de forme l'une avec l'autre de sorte que la douille de connecteur (26) est raccordée au boîtier (3) sans possibilité de se mettre en rotation et
la douille de connecteur (26) est raccordée dans la direction axiale par conjugaison de forme et/ou à force, en particulier avec une connexion serrée, au boîtier (3).

9. Procédé de fabrication d'un détecteur (1), **caractérisé en ce qu'**au moins une partie de la section arrière (56) de la douille de connecteur (26) est raccordée à l'intérieur de l'ouverture de connecteur (5) par conjugaison de forme et à force.

10. Procédé selon la revendication 8 ou 9, **caractérisé en ce que** la douille de connecteur (26) est glissée jusqu'à un épaulement (58) dans l'ouverture de connecteur (5) et une force de pression axiale est ensuite appliquée sur la douille de connecteur (26), de sorte que la douille de connecteur (26) est ainsi raccordée au boîtier (3) avec une connexion serrée.

11. Procédé de fabrication d'un détecteur (1), **caractérisé en ce que** l'espace intérieur de boîtier (6) est scellé avec un produit de scellement (7) et le produit de scellement (7) durcit ensuite, un nez de raccordement (57) formé au niveau de la douille de connecteur (26), en particulier au niveau de la section avant (55) de la douille de connecteur (26) étant entouré par un produit de scellement durci, ce qui permet à la douille de connecteur (26) d'être raccordée axialement par conjugaison de forme au produit de scellement durci (7) et d'être fixée ainsi axialement à l'intérieur de l'espace intérieur de boîtier (6).
